(19) **Europäisches Patentamt**
**European Patent Office**
**Office européen des brevets**

(11) **EP 4 611 333 A1**

(12) **EUROPEAN PATENT APPLICATION**

(43) Date of publication:
**03.09.2025   Bulletin 2025/36**

(21) Application number: **25155298.0**

(22) Date of filing: **31.01.2025**

(51) International Patent Classification (IPC):
*H04L 41/0806* (2022.01)   *H04L 41/0894* (2022.01)
*H04L 41/5019* (2022.01)   *H04L 41/5022* (2022.01)
*H04L 41/5041* (2022.01)   *H04L 41/5067* (2022.01)
*H04L 43/026* (2022.01)   *H04L 47/20* (2022.01)
*H04L 47/24* (2022.01)   *H04L 47/2425* (2022.01)
*H04L 41/16* (2022.01)

(52) Cooperative Patent Classification (CPC):
H04L 41/0894; H04L 41/0806; H04L 41/5019;
H04L 41/5022; H04L 41/5041; H04L 41/5067;
H04L 43/026; H04L 47/20; H04L 47/24;
H04L 47/2433; H04L 47/2458; H04L 41/16

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.03.2024   FI 20245259**

(71) Applicant: **Nokia Solutions and Networks Oy
02610 Espoo (FI)**

(72) Inventors:
• **LIAO, Qi**
**85053 Ingolstadt (DE)**
• **LIETO, Alessandro**
**70176 Stuttgart (DE)**
• **PAPILLON, Serge**
**75014 Paris (FR)**

(74) Representative: **Nokia EPO representatives
Nokia Technologies Oy
Karakaari 7
02610 Espoo (FI)**

(54) **MICROSERVICE-AWARE FRAMEWORK FOR NETWORK-APPLICATION COLLABORATION**

(57)     Method comprising
receiving, for each of plural microservices, a respective requirement of a quality of service, wherein the plural microservices jointly build an application;
receiving a first label, wherein the first label indicates a policy status of a communication system conveying data packets from the microservices for the application;
receiving an indication of a first quality of experience of the application;
determining, for a first one of the microservices, an importance level based on the requirement of the quality of service of the first one of the microservices, the first label, and the first quality of experience,
marking a data packet originated from or designated to the first one of the microservices and to be conveyed by the communication system by the importance level determined for the first one of the microservices;
providing the data packet marked by the importance level to the communication system for conveying the data packet.

Fig. 1

## Description

Technical Field

The present disclosure relates to collaboration of a network with an application composed of microservices.

Abbreviations

| | |
|---|---|
| 3GPP | 3rd Generation Partnership Project |
| 5G | 5th Generation |
| ADAS | Advanced Driver Assistance Systems |
| AI | Artificial Intelligence |
| API | Application Programming Interface |
| AR | Augmented Reality |
| CSC | Communications Service Customer |
| CSP | Communications Service Provider |
| DDPG | Deep Deterministic Policy Gradient |
| ECN | Explicit Congestion Notification |
| IMO | Importance Marker Optimizer |
| KPI | Key Performance Indicators |
| LAN | Local Area Network |
| MAC | Medium Access Control |
| MF | Max-Min Fairness |
| ML | Machine Learning |
| NSaaS | Network Slice as a Service |
| NSMF | Network Slice Management Function |
| NSSMF | Network Slice Subnet Management Function |
| PF | Proportional Fair |
| PHY | Physical Layer |
| QoE | Quality of Experience |
| QoS | Quality of Service |
| RAN | Radio Access Network |
| RR | Round Robin |
| SLA | Service Level Agreement |
| TD | Time Domain |
| URLLC | Ultra Reliable Low Latency Communications |
| VR | Virtual Reality |

Background

In 3GPP, a service level agreement (SLA) is a contract between the communications service provider (CSP) and communications service customer (CSC) defining the communication service requirements for defined services, such as 5G LAN, ultra reliable low latency communications (URLLC) [3GPP TS 28.535]. This means that the application services can specify the minimum acceptable standard of network services and the CSP provides the required network services for them. Examples of application services are the streaming service Netflix, or the cloud gaming service GeForce NOW, or automated driving service TomTom's driver assistance systems (ADAS).

Today's applications are usually composed of a multitude of microservices managed through virtual machines or container environments. Enterprises such as Amazon, Netflix, and Uber have already adopted microservices architecture to achieve scalability and adaptability advantages.

There are several solutions for the management of a microservice architecture for cloud-native applications. The most successful platform adopted for the design and deployment of cloud applications is Kubernetes, which offers a wide range of solutions for the optimal placement, selection, and execution of the microservices which compose the applications.

Summary

It is an object to improve the prior art.

According to a first aspect, there is provided an apparatus comprising

means for receiving, for each of plural microservices, a respective requirement of a quality of service, wherein the plural microservices jointly build an application;
means for receiving a first label, wherein the first label indicates a policy status of a communication system conveying data packets from the microservices for the application;
means for receiving an indication of a first quality of experience of the application;
means for determining, for a first one of the microservices, an importance level based on the requirement of the quality of service of the first one of the microservices, the first label, and the first quality of experience,
means for marking a data packet originated from or designated to the first one of the microservices and to be conveyed by the communication system by the importance level determined for the first one of the microservices;
means for providing the data packet marked by the importance level to the communication system for conveying the data packet.

The means for determining may be configured to determine, for each of the microservices, a respective importance level based on the requirement of the quality of service of the respective microservice, the first label, and the first quality of experience, and

the means for marking may be configured to mark, for each of the microservices, a data packet originated from or designated to the respective microservice and to be conveyed by the communication system by the importance level determined for the respective microservice.

The means for determining may be configured to determine an inter-microservice importance level based on the requirement of the quality of service of the first one of the microservices, the requirement of the quality of service of a second one of the microservices, the first label, and the first quality of experience; and

the means for marking may be configured to mark an inter-microservices data packet by the inter-microservice importance level, wherein the inter-microservices data packet is to be conveyed by the communication system between the first one of the microservices and the second one of the microservices.

The importance level determined for the first one of the microservices may be included in a header of the data packet originated from or designated to the first one of the microservices and to be conveyed by the communication system.

The data packet originated from or designated to the first one of the microservices and to be conveyed by the communication system may belong to a traffic flow, and the traffic flow may be marked by the importance level.

The apparatus may further comprise

means for receiving, from the communication system in response to the providing the data packet marked by the importance level to the communication system, a second label indicating a policy status of the communication system after the communication system evaluated the importance level;
means for receiving, in response to the providing the data packet marked by the importance level to the communication system, an indication of a second quality of experience of the application;
means for adapting the determining by the means for determining based on the first label, the second label, the requirements of the quality of service of each of the microservices, the first quality of experience, and the second quality of experience for optimizing the quality of experience of the application.

The means for adapting may be configured to adapt the determining by the means for determining by machine learning. The machine learning may comprise at least one of reinforcement learning and supervised learning.

According to a second aspect, there is provided an apparatus, comprising

means for receiving, from an optimizer, a data packet for conveying the data packet by a communication system, wherein the data packet is marked by an importance level;
means for modifying a policy status of the communication system based on the importance level;
means for informing the optimizer by a label on the policy status of the communication system after the policy status of the communication system was modified by the means for modifying.

The apparatus may further comprise

means for mapping the policy status of the communication system to the label, wherein a number of available labels is smaller than a number of available policy statuses of the communication system.

The policy status of the communication system may comprise at least one of a policy status of a physical layer of the communication system, a policy status of a medium access control layer of the communication system, a policy status of a transport layer of the communication system, an edge computing policy status of the communication system, or a computational resource allocation policy status of the communication system.

According to a third aspect, there is provided a method comprising

receiving, for each of plural microservices, a respective requirement of a quality of service, wherein the plural microservices jointly build an application;

receiving a first label, wherein the first label indicates a policy status of a communication system conveying data packets from the microservices for the application;

receiving an indication of a first quality of experience of the application;

determining, for a first one of the microservices, an importance level based on the requirement of the quality of service of the first one of the microservices, the first label, and the first quality of experience,

marking a data packet originated from or designated to the first one of the microservices and to be conveyed by the communication system by the importance level determined for the first one of the microservices;

providing the data packet marked by the importance level to the communication system for conveying the data packet.

For each of the microservices, a respective importance level may be determined based on the requirement of the quality of service of the respective microservice, the first label, and the first quality of experience, and,

for each of the microservices, a data packet originated from or designated to the respective microservice and to be conveyed by the communication system may be marked by the importance level determined for the respective microservice.

An inter-microservice importance level may be determined based on the requirement of the quality of service of the first one of the microservices, the requirement of the quality of service of a second one of the microservices, the first label, and the first quality of experience; and

an inter-microservices data packet may be marked by the inter-microservice importance level, wherein the inter-microservices data packet is to be conveyed by the communication system between the first one of the microservices and the second one of the microservices.

The importance level determined for the first one of the microservices may be included in a header of the data packet originated from or designated to the first one of the microservices and to be conveyed by the communication system.

The data packet originated from or designated to the first one of the microservices and to be conveyed by the communication system may belong to a traffic flow, and the traffic flow may be marked by the importance level.

The method may further comprise

receiving, from the communication system in response to the providing the data packet marked by the importance level to the communication system, a second label indicating a policy status of the communication system after the communication system evaluated the importance level;

receiving, in response to the providing the data packet marked by the importance level to the communication system, an indication of a second quality of experience of the application;

adapting the determining the importance level based on the first label, the second label, the requirements of the quality of service of each of the microservices, the first quality of experience, and the second quality of experience for optimizing the quality of experience of the application.

The determining the importance level may be adapted by machine learning. The machine learning may comprise at least one of reinforcement learning and supervised learning.

According to a fourth aspect, there is provided a method, comprising

receiving, from an optimizer, a data packet for conveying the data packet by a communication system, wherein the data packet is marked by an importance level;

modifying a policy status of the communication system based on the importance level;

informing the optimizer by a label on the policy status of the communication system after the policy status of the communication system was modified.

The method may further comprise

mapping the policy status of the communication system to the label, wherein a number of available labels is smaller than a number of available policy statuses of the communication system.

The policy status of the communication system may comprise at least one of a policy status of a physical layer of the communication system, a policy status of a medium access control layer of the communication system, a policy status of a transport layer of the communication system, an edge computing policy status of the communication system, or a computational resource allocation policy status of the communication system.

Each of the methods of the third and fourth aspects may be a method of collaboration of a network with an application.

According to a fifth aspect, there is provided a computer program product comprising a set of instructions which, when executed on an apparatus, is configured to cause the apparatus to carry out the method according to any of the third and fourth aspects. The computer program product may be embodied as a computer-readable medium or directly loadable into a computer.

According to some example embodiments, at least one of the following advantages may be achieved:

- Network may provide resources and capacity according to the importance of the microservices for the QoE;
- Resources and energy may be utilized efficiently;
- Overprovisioning may be avoided or reduced;
- Privacy of at least one of the application and the network (or both or them) towards the other one may be preserved.

Brief description of the drawings

Further details, features, objects, and advantages are apparent from the following detailed description of the preferred example embodiments which is to be taken in conjunction with the appended drawings, wherein:

Fig. 1 shows a framework according to some example embodiments;
Fig. 2 (comprising Figs. 2A and 2B) shows an action flow according to some example embodiments;
Fig. 3 shows importance marker assignment extended to inter-microservices communication according to some example embodiments;
Fig. 4 shows a basic actor-critic architecture for optimizing the importance level assignment according to some example embodiments;
Fig. 5 shows how an example embodiment is applied to a streaming application (e.g. Netflix) as an example;
Fig. 6 shows an apparatus according to an example embodiment;
Fig. 7 shows a method according to an example embodiment;
Fig. 8 shows an apparatus according to an example embodiment;
Fig. 9 shows a method according to an example embodiment; and
Fig. 10 shows an apparatus according to an example embodiment.

Detailed description of certain example embodiments

Herein below, certain example embodiments are described in detail with reference to the accompanying drawings, wherein the features of the example embodiments can be freely combined with each other unless otherwise described. However, it is to be expressly understood that the description of certain example embodiments is given by way of example only, and that it is by no way intended to be understood as limiting the disclosure to the disclosed details.

Moreover, it is to be understood that the apparatus is configured to perform the corresponding method, although in some cases only the apparatus or only the method are described.

The SLA is basically a one-directional framework, i.e., CSC first specifies requirements, then CSP provides network service. This approach may lead to the following challenges:

1) Today's widely used applications are usually built as collections of multiple microservices which can operate independently and communicate via well-defined interfaces typically using lightweight APIs. Each of these microservices has its own network service requirements, and contributes to the final user experience (QoE) with different levels of importance. A network slicing-based SLA cannot address the different requirements and importance levels of multiple microservices within an application.

2) The one-directional framework assumes that the customer/application knows exactly how to specify the requirements to provide optimal user experience. However, in real life, it remains unknown to both application and network how the network QoS maps to the users' QoE, due to the limited interactions between the CSP and CSC. This usually leads to an over-provision of communications resources, which jeopardizes the network's performance in a multi-user, resource-hungry scenario, such as the cloud-gaming and AR/VR.

The decomposition of the application into microservices introduces some challenges to the network service:

1) The operation of different microservices may result in different requirements on the communication system (network). E.g., for Uber, the microservices for trip management and billing have a higher latency and higher security requirements than the passenger and driver management (ratings and reviews).

2) The communication between the microservices may result in different network requirements. Some microservices require synchronous communication while others allow asynchronous communication or event driven communication. E.g., for Netflix the user authentication requires synchronous communication between the authentication microservice and the user management microservice, while the ratings and recommendations allow asynchronous communication.

3) For a good user's experience, a correct and timely execution of each microservice is typically needed. However, not all the microservices contribute homogenously to the user's experience. E.g., the delay of the rating/reviews does not impact the users' experience as strongly as the delay for ordering or for payment. A differentiation among different microservices in level of importance can help the network to offer dedicated and prioritized performance for the ones that are the most critical for the user experience.

Thus, it is useful to introduce a micro service-aware communications service solution targeting goal-oriented user experience. As additional requirements, it would be useful that the interaction between the network and the application is lightweight. Still furthermore, it is recommendable to preserve privacy of both sides (application (CSC) and communication service (CSP)).

Solutions for the management of microservices-based applications (such as Kubernets) typically consider only the cloud infrastructure, performing actions based on the availability and performance of computing and storage nodes. They offer customizable ways to handle the microservices, by defining both QoS and priority levels that are used by a scheduler to optimally allocate resources in the cloud infrastructure. Those solutions typically lack knowledge from the network side. The lack of knowledge might result in overprovisioning on the network side, which can be very costly for ensuring low-latency and ultra reliability, like for industrial applications. Additional services offer network monitoring as a service, but

they cannot take actions at network level, while rather responding to any network impairment.

Some example embodiments take into account both the inherent microservice architecture behind an application and how the different microservices are valued/prioritized differently based on the expected goal of the application (i.e. QoE of the users of the application). To ensure a good (optimized) QoE, at least some of the packets conveyed for the application (i.e. from/to the microservices building the application and between the microservices) by the communication system are marked by an importance level. The communication system (sometimes denoted as network) takes the importance level into account for treating the packet and to adapt its status (network policy) accordingly.

A conventional "one SLA for one application/service" approach does not take into account that the microservices may have different QoS requirements. This ignorance may limit the scalability and profitability of the network service. Moreover, the one-directional framework of a conventional SLA (i.e., "the application specifies requirements, and network provides service") often causes over-provision of the communications resources and inefficient use of the energy. Especially in a resource-hungry multi-user scenario such as cloud gaming or AR/VR, network can easily suffer from congestion because of over-provision for a lot of applications.

Some example embodiments provide a lightweight, microservice-aware, dual-side privacy-preserving network-application collaborative framework to improve the goal-oriented user's QoE. In particular, the following problems are addressed:

- *Achieving the user's goal:* How to autonomously **learn** the **importance levels** that reflect different QoS requirements of multiple microservices and their different contributions to the final QoE?
- *Application-Network information exchange:* How to facilitate the **microservice-specific information exchange** between the application provider and the network provider, while preferably protecting the **privacy** of both sides?
- *Lightweight Application-Network cooperative framework:*

  - From the application side, how to assign the importance levels to microservices and efficiently make them aware to the network?
  - From the network side, how to enable the importance level-aware network optimization policies and efficiently make them aware to the application?

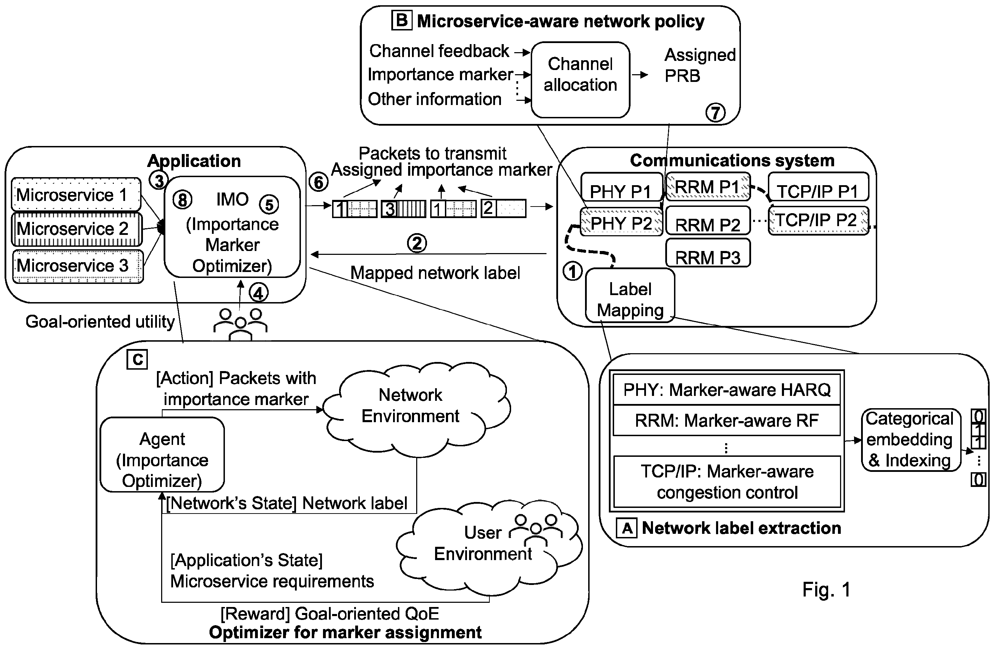

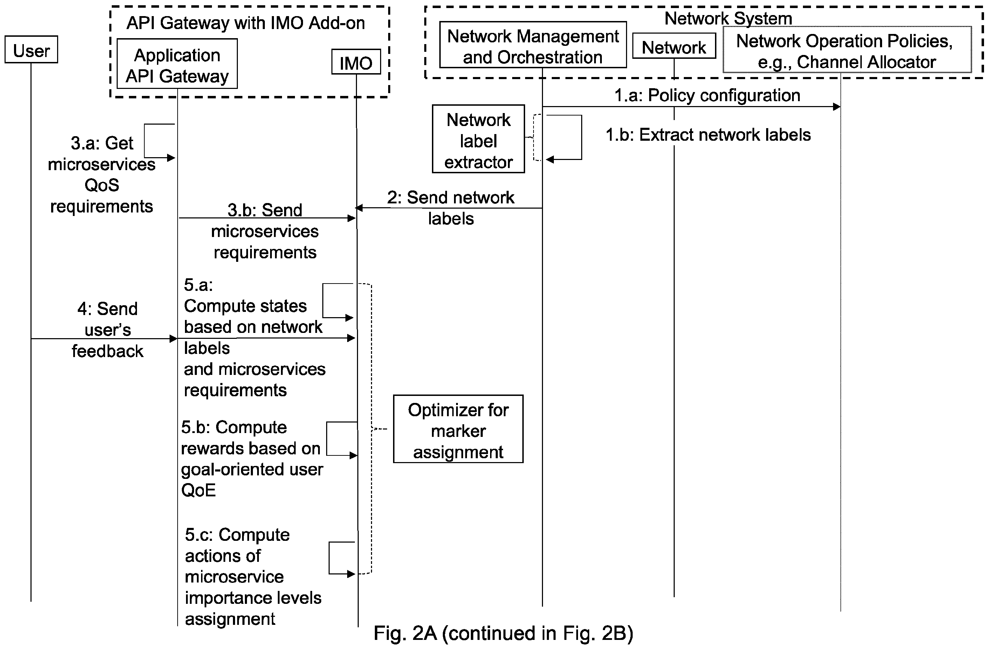

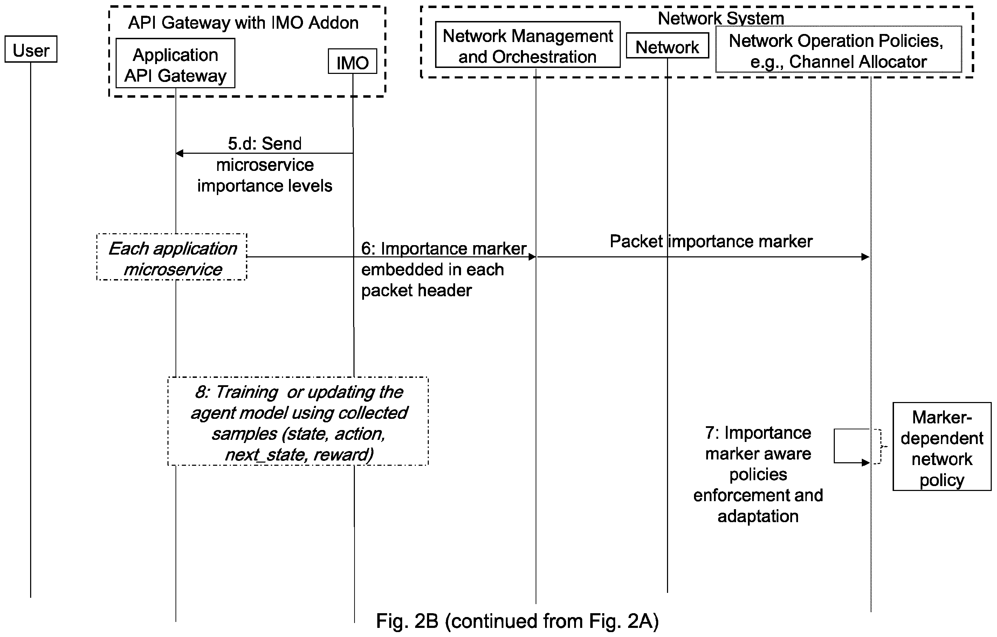

A framework according to some example embodiments is shown in Fig. 1. In Fig. 1, the numerals in circles show where the actions depicted in Fig. 2 (described further below) take place. The components of this framework are as follows:

- On **application/service** side:

  - Each application/service assigns different importance levels to its microservices and embeds this **"importance marker"** in the header of the network packets and/or traffic flows. As another option, the application may signal the importance marker to the network orchestration and management function to identify the flow based on their importance marker. Thus, all the packets of the flow are marked by the importance marker of the flow. Note that the importance marker can change over time to adapt to the current goal of the application.
  - An **Importance Marker Optimizer (IMO)** assigns the importance level for each microservice using techniques such as reinforcement learning based on the following information:

    - *Goal-oriented reward:* observed users' QoE
    - *Microservice-specific state:* microservice-specific QoS requirements
    - *Extracted network policy status:* a **"network label"** (extracted label of network's policies, provided by the network).

The network need not to know any details of the microservices and is not involved in the application's decision on the assignment of the importance levels to the microservices. This preserves the privacy of the application towards the network.

- On **communications system** side:

  - Network owns a set of optional policies to **allocate resources based on the "importance marker",** e.g., channel allocation, retransmission probability control, radio resource scheduling, and other resource allocation policies including both the communication and computational resources (e.g., in case of mobile edge computing). The differentiation among different microservices in level of importance helps the network to offer dedicated and prioritized performance for the ones that are most critical for the user experience.
  - The network **maps** its selected **policies** (e.g., radio scheduling, congestion control, retransmission strategy, ...) to a **"network label",** e.g., with categorical embedding, and provide it to the application. A network label could potentially correspond also to a specific network slice identifier, where a network slice embeds the E2E network policies adopted for serving the flows with the same importance marker.

In some example embodiments, the label may indicate the status of the communication system (network) in detail, such as a physical layer of the communication system, a status of a medium access control layer of the communication system, a status of a transport layer of the communication system, an edge computing policy status of the communication system, or a computational resource allocation policy status of the communication system. However, in some example embodiments, the label shows an aggregated status of the network. I.e., typically, the number of available labels is smaller than the number of status available for the network. This preserves the privacy of the network towards the application.

The importance marker and the label enable an ultra-light information exchange between the application and the network, since the network may only provide a high-level extracted label that represents its combination of policies (i.e., network configurations), to avoid a heavy and frequent feedback on its fine states such as channel states or buffer size, etc.

In some example embodiments, the framework is extended to inter-microservices communication (i.e. between different microservices of the application) conveyed by the communications system. The importance marker assigned to a packet in inter-microservices communication may depend on the QoS requirements of both microservices.

In some example embodiments, the importance marker may be computed by IMO. IMO may be implemented as an **add-on to the API gateway.** As another option, IMO may be implemented as a stand-alone application or microservice. It helps the network to adapt its policies towards the application's goal (i.e. a good or even optimized QoE) by providing dedicated or prioritized performance to the microservices that are the most critical for the user's QoE.

Fig. 2 (comprising Figs. 2A and 2B) shows an action flow according to some example embodiments. The numerals of the actions in Fig. 2 are also shown in Fig. 1 (in circles). In Fig. 1, the numerals indicate where the respective action takes place in the framework according to some example embodiments. The actions are as follows:

1. Network (e.g., the network management and orchestration function or a network slice management function (NSMF)) defines its own combination of the policies across different layers (e.g., channel allocation policy at the PHY layer, packet scheduling policy at the MAC layer, etc.) **(1.a)** and maps it to a network label, typically by an encoding technique **(1.b)**, such as categorical embedding. The details of the "mapping from policy combination to network label" solution is explained further below. At least some of these policies, if not all of them, are aware of the importance markers. For example, according to a policy for channel allocation, a packet with higher importance marker will be allocated with a better channel; according to a policy for scheduling, a packet with a lower importance marker will be allocated with less resources and be considered to be more delay tolerant. An example design of an importance marker-aware network policy is provided further below.

2. Network (e.g., the network management and orchestration function or a network slice management function (NSMF)) sends its extracted network label (indicating its policy status) to the IMO on the application side. The IMO receives this message from the network.

3. Application collects the QoS requirements of the microservices building the application **(3.a)**, e.g., via the API gateway. The application provides the information about the QoS requirements to the IMO for the importance marker assignment **(3.b)**.

4. Application collects the users' feedback and compute the reward based on the goal-oriented user experience (QoE). An example how to determine a QoE is described for Netflix as an example application further below. The determination of the QoE is application specific.

5. Based on the collected data of network label, QoS requirements of the microservice, and observed user feedback (QoE), IMO computes the state **(5.a)**, reward **(5.b)**, and decides the actions of the importance level assignment to each microservice **(5.c)**. E.g., in Fig. 1, the microservices 3, 2, and 1 are assigned with different importance markers 1, 3, and 2, respectively. Note that although in Fig. 1 ranked positive integers are used as the importance markers, other values can also serve as importance markers, such as positive floats. The optimized microservice-specific importance markers are then provided to the API gateway **(5.d)**. IMO for importance marker assignment may be trained with AI/ML techniques, e.g., reinforcement learning. An example of the IMO based on reinforcement learning is provided further below.

As another option, IMO may comprise a look-up table, where the importance marker is indicated for each combination of network label, QoS requirement of the microservice, and QoE. In some example embodiments, IMO may derive an intermediate value by a look-up table based on a subset of the input parameters network label, QoS requirement of the microservice, and QoE, and determine the importance marker by a trained neural network into which the intermediate value and the remaining input parameters are input.

6. The API gateway embeds the importance marker determined by IMO into the headers of the packets or traffic flows from the different microservices. These packets and traffic flows are transmitted and received over the communications system.

7. If the packets or traffic flows have importance markers, the network activates the importance marker-aware policies and applies them to the packets or traffic flows. In addition, the network adapts its policies (such as communications and/or computational resource allocation decisions) for the packets or traffic flows based on the importance markers. An example is described further below.

8. In some example embodiments, the determination of the importance marker by IMO is static. However, according to some example embodiments, with the continuously collected samples (QoS requirements of the microservices, labels of the network, and QoEs) in IMO, the IMO can train/update/fine-tune its model according to the application's preference. Some options are as follows:

   a. The model is fine-tuned with the newly collected samples periodically,
   b. The model is continuously updated with continual learning, or
   c. The model retraining is activated reactively or predictively, by observing or predicting the degradation of users' QoE.

Not only the different microservices may have different requirements to the network, but also **inter-microservice communication** may have different network requirements. As an example, for Netflix the user authentication requires synchronous communication with more strict delay constraints between the authentication microservice and the user management microservice, while the ratings and recommendations allow asynchronous communication with more delay tolerant communication.

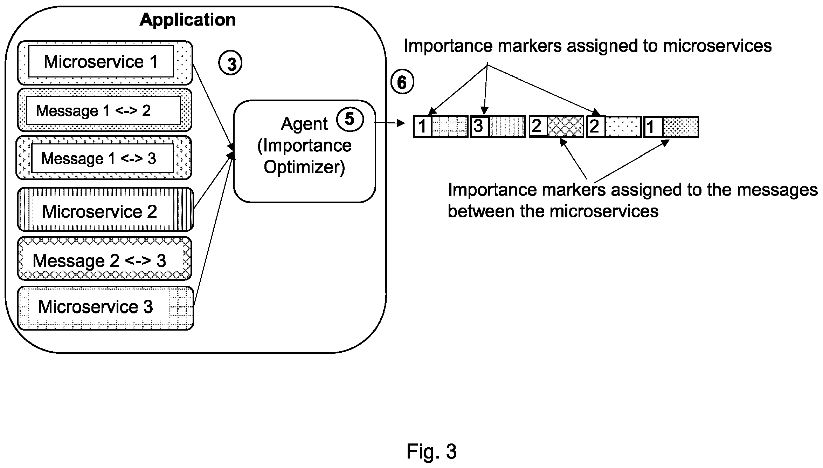

As shown in Fig. 3, the importance marker assignment may not only mark the packets from/to the microservices to/from an entity external to the application, but also the communication messages between the microservices of the application. For example, in Fig. 3, microservices 3, 2, and 1 are assigned with importance marker 1, 3, 2, respectively. Moreover, the communication messages between microservices 2 and 3 are assigned with importance marker 2, while communication messages between microservice 1 and 2 are assigned with importance marker 1. Thus, the resource and energy efficiency for inter-microservice communications is improved, too.

For inter-microservice communication, except for the actions 3, 5, and 6, all the other steps remain the same as explained for Figs. 1 and 2. The modifications of the actions 3, 5, and 6 are described below:

- Action 3: Application collects the QoS requirements for not only operating the microservices, but also the inter-microservice communication.
- Action 5: The IMO also includes the QoS requirements of the inter-microservice communications in the input features, and, in the output actions, also decides the importance level of the inter-microservice communications.
- Action 6: The optimized importance markers are assigned to both microservices' operating packets/flows and the messages for inter-microservice communications.

From the network side, the actions remain the same as described with respect to Figs. 1 and 2 because the network policy adapts the priority or weight of the packet/flow based on the assigned importance markers, regardless of whether it is for operating the microservice or for inter-microservice communications.

Hereinafter, examples of network label extraction (action 1.b), a marker aware policy (action 7), and implementation of IMO are described at greater detail.

**Network label extraction**

Next, an example of network label extraction (action 1 in Fig. 2; i.e. how the network label is derived based on the actual policy status of the network) is described. In some example embodiments, the label will be created and managed at the Network Management and Orchestration Function level. As another option in the context of 5G slicing, the label management takes place in the NSMF (Network Slice Management Function), that relies on the different NSSMF (Network Slice Subnet Management Function) at Access Network, Transport Network and Core Network level to enforce the configuration and optimization policies of the network for the slices. The NSMF and NSSMF may be enhanced to create and maintain the network labels.

The network may be configured with a large set of network optimization policies composed of optional policies for each of the layers. For example, the options of the RAN scheduler at the MAC layer include round robin (RR), proportional fair (PF), max-min fairness (MF), etc. The network label mapping function may map the network's operating policies to a short code as the "network label", as shown in Block A in Fig. 1.

Assuming the network has a set of $N$ **policies** implemented at different layers, denoted by a set $\mathcal{N} := \{1, \dots, N\}$.

$$\mathcal{O}^{(n)} := \left\{ O_1^{(n)}, \dots, O_{K_n}^{(n)} \right\}$$

Each policy $n \in \mathcal{N}$ has $K_n$ different **options** to activate for operating the network. For example, the policy set $\mathcal{N}$ includes the beamforming policy at PHY layer, the scheduling policy at MAC layer, etc., while the options of the scheduling policy include RR, PF, MF. A network operates under a set of chosen options of these policies

$$\mathcal{O}^* := \left\{ \mathcal{O}_*^{(1)}, \dots, \mathcal{O}_*^{(N)} \right\}$$, where $\mathcal{O}_*^{(n)}$ denotes the chosen option for policy $n \in \mathcal{N}$. Thus, the network label mapping problem is to project the categorical information $\left\{ \mathcal{O}_*^{(1)}, \dots, \mathcal{O}_*^{(N)} \right\}$ to a code in a code alphabet $\mathcal{A}$. This is an encoding problem, i.e., to find an encoder:

$$f : \prod_{n \in \mathcal{N}} \mathcal{O}^{(n)} \to \mathcal{A}.$$

Because the $\mathcal{O}_*^{(n)}$, $\forall n$ contains categorical information, one may use a known categorical embedding technique.

**Marker aware policy**

At least a part of the network policies may comprise importance marker-awareness to prioritize the packets/flows from microservices with higher importance levels, as indicated by the respective importance marker. There may be different strategies to prioritize or weight the network performance based on the importance marker and introduce these strategies into the options of network policy, as shown in module B in Fig. 1. In this way, the information of the chosen importance marker-dependent strategy is also embedded in the network label and provided to the application for better optimization of the importance level assignment.

In an example, the RAN scheduling policy is extended with importance marker awareness. A similar extension can be easily done for the other policies. The RAN scheduling strategy has two conventional options: round-robin (RR) and proportional fairness (PF). RR handles all packets/flows without priority, also known as cyclic executive. To introduce into RR the priority of the microservices with higher importance level, they may be served with fixed priority rank based on the importance levels. E.g., importance levels 3, 2, 1 are defined with the priority rank 1, 2, 3, respectively. For conventional PF, the channel is scheduled based on the priority function $P = T^{\alpha}/R^{\beta}$ where $T$ denotes the data rate potentially achievable in the present time slot, while R is the historical average data rate, and $\alpha$ and $\beta$ are the tuning factors for adjusting the fairness. This formulation adjusts the balance between serving the best terminals with best channel conditions and serving the terminals with poor performance such that they can reach an acceptable level of performance. To introduce the importance marker awareness, we can define a modified priority $P' = g(P, l)$ which is monotonically increasing with the importance level $l$ for any fixed priority $P$. Different functions can be defined, such as affine functions where $P' = aP + b$ and $a, b$ are non-negative real numbers.

### IMO implementation

The IMO's definition and usage are described with respect to **actions 3, 5, and** 8. The **IMO** may be implemented as a **plug-in add-on in the API** gateway. The provider of the add-on may be the CSP, for example. As described, the IMO serves as a lightweight interface between the Application API and the network system. On one hand, it receives feedback from the network by means of the extracted network labels; on the other hand, it receives microservices' information and users' feedback from the API gateway. Since it is an add-on in the API gateway, the application is responsible for its own importance level assignment of the microservices, and network only passively reacts to it. This helps protect the privacy of the application. The network also benefits from the embedded importance markers of the packets/flows, as it allows a more efficient resource and energy utilization for satisfying the users' QoE.

As an example embodiment, the IMO for importance marker assignment may be designed with reinforcement learning agent as shown in Module C in Fig. 1.

- The **state** is composed of 1) network label indicating the network policies, and 2) microservices' QoS requirements. For the second embodiment we can add 3) QoS requirements of the inter-microservice communications.

- The **action** is the assigned importance marker of each microservice. For inter-microservice communications, the action also includes the importance marker of the inter-microservice communication.

- The **reward** is defined as the goal-oriented users' QoE.

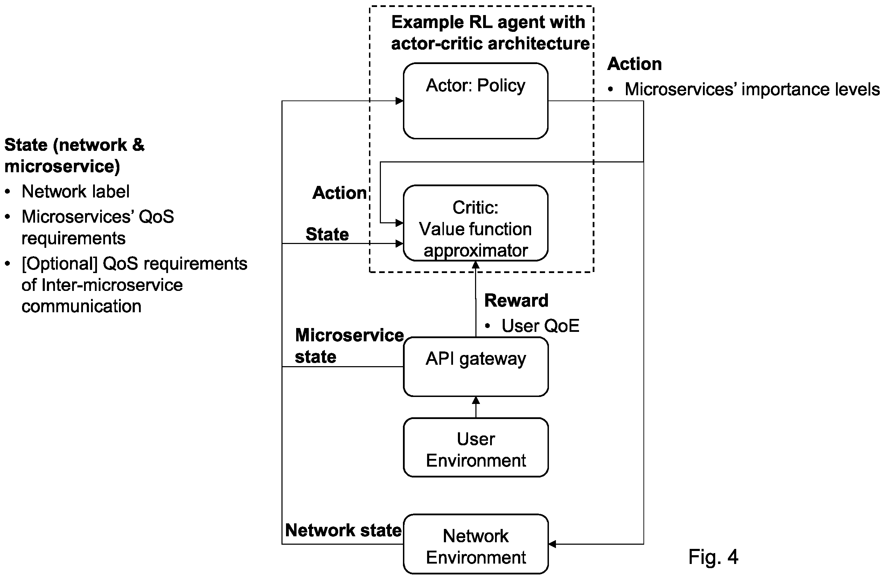

Various reinforcement learning methods can be used, for example, the actor-critic algorithms. The actor-critic algorithm combines both policy-based methods (actor) and value-based methods (critic). In particular, the actor learns a policy to make decisions on the action, based on the observed state, and the critic evaluates the action taken by the actor for given state by estimating the value function. An example embodiment of an architecture of the actor-critic deep reinforcement learning model for the optimization of the importance level assignment is shown in Fig. 4.

Some example embodiments provide at least one of the following advantages:

- Goal-oriented and microservice-aware: The microservice-specific importance marker helps the network to adapt its policies towards the application's goal by providing dedicated or prioritized performance for the microservices that are the most critical for the user's QoE.
- Efficient resource and energy utilization: Network adapts its optimization policies based on the importance markers, preventing the resource over-provision, and encouraging the energy saving, e.g., less critical microservices can be allocated with less resource and requires less frequently retransmission without affecting the user's QoE.
- Dual-side privacy-preserving: 1) Application optimizes and assigns the importance markers to its microservices, while network does not directly intervene. 2) Network maps its policies to label, and application does not know the details of the network's configuration.
- Lightweight network-application interaction: The exchanged information includes only a higher layer extraction of network label and the embedded importance marker in the packets/flows. Moreover, the interaction is realized via IMO as a lightweight plug-in add-on to the API gateway.

Some example embodiments may be applied to a wide range of applications built by multiple microservices with different QoS requirements such as:

- Cloud Gaming: the microservices in charge of fetching the physical interaction of the gamer with the game controllers will deal with real-time, high frequency, small size data, while the microservices in charge of computing the visualization of the game necessitate access to dedicated hardware and the microservices streaming the visual state of the game require high bandwidth.

- AR/VR applications: VR application will share many similarities with cloud gaming applications. The different microservices dealing with the control, visualization and streaming will have very different needs. AR applications can be more versatile in terms of mode of operation and the level of added information. Nevertheless, their different sub-components are bound to be very unbalanced in term of upstream and downstream network needs.

- Vertical industrial applications: some microservices will gather lots of heterogenous data from physical sensors (leading to many combinations of frequency and size of reporting data), while automation microservices will apply control loops algorithms and issue control commands to physical actuators. Some of the controls need to be real time (for instance the safety related ones), while others can stand to have a longer time window (like small performance configuration adjustments).

As an example, it is shown how the framework according to some example embodiments may be applied to a streaming application, such as Netflix.

The Netflix's service is decomposed into many microservices. Some of them are shown in Table 1, together with their description and QoS requirements.

**Table 1:** Example microservices of streaming applications and their QoS requirements.

| Microservice | Description | QoS Requirements |
|---|---|---|
| Subscribe-service | For users' subscription | Throughput: low<br>Latency: medium<br>Security/Reliability: high |
| Auth-service | For authentication process of the system, auth-user retrieve, auth-user store. | Throughput: low<br>Latency: low<br>Security/Reliability: high |
| Product-service | For movie store and listing. | Throughput: high<br>Latency: high<br>Security/Reliability: low |
| Order/Billing-service | For movie ordering and billing. | Throughput: low<br>Latency: low<br>Security/Reliability: high |
| Search-service | For searching products and categories. | Throughput: medium<br>Latency: low<br>Security/Reliability: medium |
| Recommendation-service | For movie recommendations. | Throughput: medium<br>Latency: medium<br>Security/Reliability: low |
| Streaming-service | For video streaming. | Throughput: high<br>Latency: low<br>Security/Reliability: low |
| Caching-service | For caching the most popular or most likely to be watched contents by users | Throughput: medium<br>Latency: high<br>Security/Reliability: low |

(continued)

| Microservice | Description | QoS Requirements |
|---|---|---|
| Review-service | For review process and censoring the reviews. | Throughput: low<br>Latency: high<br>Security/Reliability: medium |

The users' QoE can be computed based on the following metrics:

- Rebuffer rate: a measure of how often playback is temporarily interrupted while more data is downloaded from the server to replenish the local buffer on the client device.
- Bitrate: the quality of the picture that is served/watched, e.g., a low bitrate results in a fuzzy picture.
- Other intrinsic metrics related to viewing experience.
- Users' direct feedback or rating.
- Other analytics including active subscribers, subscriber growth rate, churn rate, content hours streamed, etc.

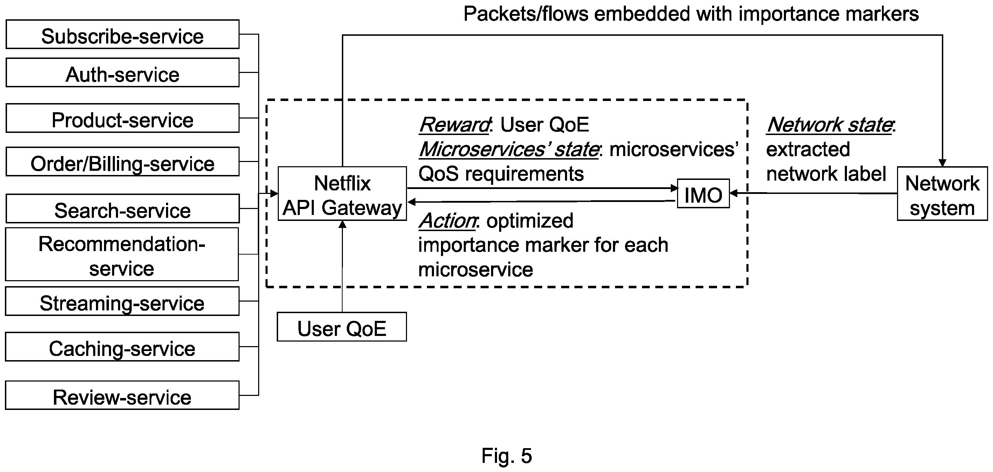

An IMO add-on, as shown in Fig. 1 and Fig. 2 can be added to the Netflix system, such that the importance markers are automatically learned and assigned to the microservices, based on the extracted network label provided by the network, the microservices' QoS requirements known to the API gateway, and the computed users' QoE based on the application's interest. The framework is shown in Fig. 5. Note that, for brevity, the details at the network system side are omitted, but the architecture, functions, and message flows are similar to those shown in Fig. 2, and the IMO's algorithm can have a similar design as described hereinabove with respect to Fig. 4.

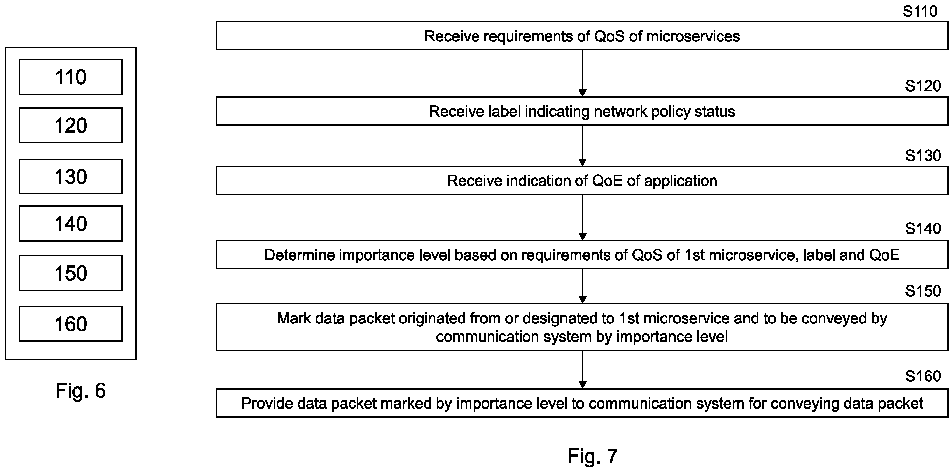

Fig. 6 shows an apparatus according to an example embodiment. The apparatus may be an optimizer (such as an IMO) or an element thereof. Fig. 7 shows a method according to an example embodiment. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises first means for receiving 110, second means for receiving 120, third means for receiving 130, means for determining 140, means for marking 150, and means for providing 160. The first means for receiving 110, second means for receiving 120, third means for receiving 130, means for determining 140, means for marking 150, and means for providing 160 may be a first receiving means, second receiving means, third receiving means, determining means, marking means and providing means, respectively. The first means for receiving 110, second means for receiving 120, third means for receiving 130, means for determining 140, means for marking 150, and means for providing 160 may be a first receiver, second receiver, third receiver, determiner, marker, and provider, respectively. The first means for receiving 110, second means for receiving 120, third means for receiving 130, means for determining 140, means for marking 150, and means for providing 160 may be a first receiving processor, second receiving processor, third receiving processor, determining processor, marking processor, and providing processor, respectively.

The first means for receiving 110 receives, for each of plural microservices, a respective requirement of a quality of service (S110). The plural microservices jointly build an application.

The second means for receiving 120 receives a label (S120). The label indicates a policy status of a communication system conveying data packets from the microservices for the application.

The third means for receiving 130 receives an indication of a quality of experience of the application (S130).

The means for determining 140 determines, for a first one of the microservices, an importance level (S140). The determination is based on the requirement of the quality of service of the first one of the microservices, the label, and the quality of experience.

The means for marking 150 marks a data packet by the importance level determined for the first one of the microservices (S150). The data packet is originated from or designated to the first one of the microservices and to be conveyed by the communication system.

The means for providing 160 provides the data packet marked by the importance level to the communication system for conveying the data packet (S160).

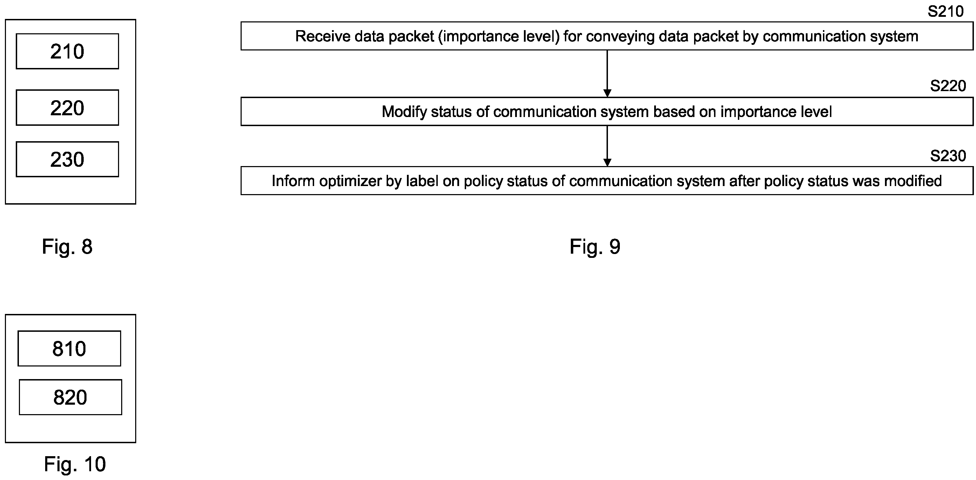

Fig. 8 shows an apparatus according to an example embodiment. The apparatus may be communication system (such as a network) or an element thereof (e.g. a NSMF or a NSSMF, or an element of one of these network functions). Fig. 9 shows a method according to an example embodiment. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises means for receiving 210, means for modifying 220, and means for informing 230. The means for receiving 210, means for modifying 220, and means for informing 230 may be a receiving means, modifying means, and informing means, respectively. The means for receiving 210, means for modifying 220 and means for informing 230 may be a receiver, modifier, and informer, respectively. The means for receiving 210, means for modifying 220 and means for informing 230 may be a receiving processor, modifying processor, and informing processor, respectively.

The means for receiving 210 receives, from an optimizer, a data packet for conveying the data packet by a communication system (S210). The data packet is marked by an importance level.

The means for modifying 220 modifies a policy status of the communication system based on the importance level of S210 (S220).

The means for informing 230 informs the optimizer by a label on the policy status of the communication system after the policy status of the communication system was modified by the means for modifying 220 (S230).

Fig. 10 shows an apparatus according to an example embodiment. The apparatus comprises at least one processor 810, at least one memory 820 storing instructions that, when executed by the at least one processor 810, cause the apparatus at least to perform the method according to at least one of the following figures and related description: Fig. 7 or Fig. 9.

In some example embodiments, the packets from/to all the microservices are marked by the respective importance marker. However, in some example embodiments, only packets from/to a subset of the microservices are marked by the respective importance marker. For packets not marked by the respective importance marker, the network may apply a default policy. For example, the default policy may be a handling with low priority (e.g. large latency, low throughput, etc.). The provider of the application may decide that some of the microservices have a very low importance for the QoE such that the network should treat them always with low priority. For these microservices, IMO may not determine any importance marker and their packets may remain without importance marker.

Some example embodiments are explained with respect to 6G. However, other example embodiments may be employed in other 3GPP generations, such as 4G, 5G, 7G, etc., or in other environments where data blocks as a whole are transmitted in respective transport blocks.

One piece of information may be transmitted in one or plural messages from one entity to another entity. Each of these messages may comprise further (different) pieces of information.

Names of network elements, network functions, protocols, and methods are based on current standards, or are current proposals. These names are not limiting. For example, in other versions or other technologies, the names of these network elements and/or network functions and/or protocols and/or methods may be different, as long as they provide a corresponding functionality. The same applies correspondingly to the terminal.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments provide, for example, an optimizer (such as an Importance Marker Optimizer) or an element thereof (which may or may not be actually integrated in the optimizer), an apparatus embodying the same, a method for controlling and/or operating the same, and computer program(s) controlling and/or operating the same as well as mediums carrying such computer program(s) and forming computer program product(s). According to the above description, it should thus be apparent that example embodiments provide, for example, a communication system (such as a 3GPP system) or an element thereof (which may or may not be actually integrated in the communication system), an apparatus embodying the same, a method for controlling and/or operating the same, and computer program(s) controlling and/or operating the same as well as mediums carrying such computer program(s) and forming computer program product(s).

Implementations of any of the above-described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred example embodiments. However, it should be noted that the description of the preferred example embodiments is given by way of example only and that various modifications may be made without departing from the scope of the disclosure as defined by the appended claims.

The terms "first X" and "second X" include the options that "first X" is the same as "second X" and that "first X" is different from "second X", unless otherwise specified. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. The term "or" refers to a non-exclusive "or" unless otherwise indicated (e.g., use of "or else" or "or in the alternative").

**Claims**

1. Apparatus comprising

   means for receiving, for each of plural microservices, a respective requirement of a quality of service, wherein the plural microservices jointly build an application;
   means for receiving a first label, wherein the first label indicates a policy status of a communication system conveying data packets from the microservices for the application;
   means for receiving an indication of a first quality of experience of the application; means for determining, for a first one of the microservices, an importance level based on the requirement of the quality of service of the first one of the microservices, the first label, and the first quality of experience,
   means for marking a data packet originated from or designated to the first one of the microservices and to be conveyed by the communication system by the importance level determined for the first one of the microservices;
   means for providing the data packet marked by the importance level to the communication system for conveying the data packet.

2. The apparatus according to claim 1, wherein

   the means for determining is configured to determine, for each of the microservices, a respective importance level based on the requirement of the quality of service of the respective microservice, the first label, and the first quality of experience, and
   the means for marking is configured to mark, for each of the microservices, a data packet originated from or designated to the respective microservice and to be conveyed by the communication system by the importance level determined for the respective microservice.

3. The apparatus according to any of claims 1 and 2, wherein

   the means for determining is configured to determine an inter-microservice importance level based on the requirement of the quality of service of the first one of the microservices, the requirement of the quality of service of a second one of the microservices, the first label, and the first quality of experience; and
   the means for marking is configured to mark an inter-microservices data packet by the inter-microservice importance level, wherein the inter-microservices data packet is to be conveyed by the communication system between the first one of the microservices and the second one of the microservices.

4. The apparatus according to any of claims 1 to 3, wherein the importance level determined for the first one of the microservices is included in a header of the data packet originated from or designated to the first one of the microservices and to be conveyed by the communication system.

5. The apparatus according to any of claims 1 to 3, wherein the data packet originated from or designated to the first one of the microservices and to be conveyed by the communication system belongs to a traffic flow, and the traffic flow is marked by the importance level.

6. The apparatus according to any of claims 1 to 5, further comprising

   means for receiving, from the communication system in response to the providing the data packet marked by the importance level to the communication system, a second label indicating a policy status of the communication system after the communication system evaluated the importance level;
   means for receiving, in response to the providing the data packet marked by the importance level to the communication system, an indication of a second quality of experience of the application;
   means for adapting the determining by the means for determining based on the first label, the second label, the requirements of the quality of service of each of the microservices, the first quality of experience, and the second quality of experience for optimizing the quality of experience of the application.

7. The apparatus according to claim 6, wherein the means for adapting is configured to adapt the determining by the means for determining by machine learning.

8. The apparatus according to claim 7, wherein the machine learning comprises at least one of reinforcement learning and supervised learning.

9. Method comprising

receiving, for each of plural microservices, a respective requirement of a quality of service, wherein the plural microservices jointly build an application;

receiving a first label, wherein the first label indicates a policy status of a communication system conveying data packets from the microservices for the application;

receiving an indication of a first quality of experience of the application;

determining, for a first one of the microservices, an importance level based on the requirement of the quality of service of the first one of the microservices, the first label, and the first quality of experience,

marking a data packet originated from or designated to the first one of the microservices and to be conveyed by the communication system by the importance level determined for the first one of the microservices;

providing the data packet marked by the importance level to the communication system for conveying the data packet.

10. The method according to claim 9, wherein,

for each of the microservices, a respective importance level is determined based on the requirement of the quality of service of the respective microservice, the first label, and the first quality of experience, and,

for each of the microservices, a data packet originated from or designated to the respective microservice and to be conveyed by the communication system is marked by the importance level determined for the respective microservice.

11. The method according to any of claims 9 and 10, wherein

an inter-microservice importance level is determined based on the requirement of the quality of service of the first one of the microservices, the requirement of the quality of service of a second one of the microservices, the first label, and the first quality of experience; and

an inter-microservices data packet is marked by the inter-microservice importance level, wherein the inter-microservices data packet is to be conveyed by the communication system between the first one of the microservices and the second one of the microservices.

12. The method according to any of claims 9 to 11, wherein the importance level determined for the first one of the microservices is included in a header of the data packet originated from or designated to the first one of the microservices and to be conveyed by the communication system.

13. The method according to any of claims 9 to 11, wherein the data packet originated from or designated to the first one of the microservices and to be conveyed by the communication system belongs to a traffic flow, and the traffic flow is marked by the importance level.

14. The method according to any of claims 9 to 13, further comprising

receiving, from the communication system in response to the providing the data packet marked by the importance level to the communication system, a second label indicating a policy status of the communication system after the communication system evaluated the importance level;

receiving, in response to the providing the data packet marked by the importance level to the communication system, an indication of a second quality of experience of the application;

adapting the determining the importance level based on the first label, the second label, the requirements of the quality of service of each of the microservices, the first quality of experience, and the second quality of experience for optimizing the quality of experience of the application.

15. A computer program product comprising a set of instructions which, when executed on an apparatus, is configured to cause the apparatus to carry out the method according to any of claims 9 to 14.

Fig. 1

Fig. 2A (continued in Fig. 2B)

Fig. 2B (continued from Fig. 2A)

Fig. 3

**State (network & microservice)**

- Network label
- Microservices' QoS requirements
- [Optional] QoS requirements of Inter-microservice communication

Fig. 4

Fig. 5

S110 — Receive requirements of QoS of microservices

S120 — Receive label indicating network policy status

S130 — Receive indication of QoE of application

S140 — Determine importance level based on requirements of QoS of 1st microservice, label and QoE

S150 — Mark data packet originated from or designated to 1st microservice and to be conveyed by communication system by importance level

S160 — Provide data packet marked by importance level to communication system for conveying data packet

Fig. 7

110
120
130
140
150
160

Fig. 6

EP 4 611 333 A1

| 210 |
|-----|
| 220 |
| 230 |

**Fig. 8**

| 810 |
|-----|
| 820 |

**Fig. 10**

S210

| Receive data packet (importance level) for conveying data packet by communication system |
|---|

S220

| Modify status of communication system based on importance level |
|---|

S230

| Inform optimizer by label on policy status of communication system after policy status was modified |
|---|

**Fig. 9**

**EP 4 611 333 A1**

Europäisches Patentamt

European Patent Office

Office européen des brevets

# EUROPEAN SEARCH REPORT

Application Number

EP 25 15 5298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/057794 A1 (ERICSSON TELEFON AB L M [SE]) 13 April 2023 (2023-04-13)<br>* abstract *<br>* paragraph [0001] - paragraph [0006] *<br>* paragraph [0015] - paragraph [0141] *<br>* figures 1-5 *<br>* claims 1-20 * | 1-15 | INV.<br>H04L41/0806<br>H04L41/0894<br>H04L41/5019<br>H04L41/5022<br>H04L41/5041<br>H04L41/5067<br>H04L43/026 |
| A | US 2021/117249 A1 (DOSHI KSHITIJ A [US] ET AL) 22 April 2021 (2021-04-22)<br>* abstract *<br>* paragraph [0001] - paragraph [0002] *<br>* paragraph [0050] - paragraph [0449] *<br>* figures 1-38 *<br>* claims 1-20 * | 1-15 | H04L47/20<br>H04L47/24<br>H04L47/2425<br><br>ADD.<br>H04L41/16 |
| A | WO 2023/091664 A1 (INTEL CORP [US]) 25 May 2023 (2023-05-25)<br>* abstract *<br>* paragraph [0002] - paragraph [0003] *<br>* paragraph [0007] - paragraph [0496] *<br>* figures 1-19 *<br>* claims 1-53 * | 1-15 | |
| A | US 11 563 636 B1 (KAIRALI SUDHEESH S [IN] ET AL) 24 January 2023 (2023-01-24)<br>* abstract *<br>* column 1, line 7 - column 2, line 46 *<br>* column 3, line 66 - column 29, line 18 *<br>* figures 1-10 *<br>* claims 1-20 * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 2 July 2025 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

## EP 4 611 333 A1

**ANNEX TO THE EUROPEAN SEARCH REPORT
ON EUROPEAN PATENT APPLICATION NO.**

EP 25 15 5298

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2025

| Patent document cited in search report | | Publication date | Patent family member(s) | | Publication date |
|---|---|---|---|---|---|
| WO 2023057794 | A1 | 13-04-2023 | US | 2024388512 A1 | 21-11-2024 |
| | | | WO | 2023057794 A1 | 13-04-2023 |
| US 2021117249 | A1 | 22-04-2021 | CN | 116018795 A | 25-04-2023 |
| | | | DE | 102021122880 A1 | 07-04-2022 |
| | | | FR | 3117641 A1 | 17-06-2022 |
| | | | NL | 2029116 A | 02-06-2022 |
| | | | US | 2021117242 A1 | 22-04-2021 |
| | | | US | 2021117249 A1 | 22-04-2021 |
| | | | WO | 2022072096 A1 | 07-04-2022 |
| WO 2023091664 | A1 | 25-05-2023 | CN | 117897980 A | 16-04-2024 |
| | | | EP | 4434252 A1 | 25-09-2024 |
| | | | US | 2024259879 A1 | 01-08-2024 |
| | | | WO | 2023091664 A1 | 25-05-2023 |
| US 11563636 | B1 | 24-01-2023 | NONE | | |

EPO FORM P0459

For more details about this annex : see Official Journal of the European Patent Office, No. 12/82